(19) Europäisches Patentamt
European Patent Office
Office européen des brevets

(11) EP 2 848 932 B1

(12) # EUROPEAN PATENT SPECIFICATION

(45) Date of publication and mention of the grant of the patent:
**22.08.2018 Bulletin 2018/34**

(21) Application number: **13787800.5**

(22) Date of filing: **10.05.2013**

(51) Int Cl.:
***G01N 30/88*** *(2006.01)*

(86) International application number:
**PCT/JP2013/063134**

(87) International publication number:
**WO 2013/168783 (14.11.2013 Gazette 2013/46)**

(54) **SEPARATING AGENT FOR OPTICAL ISOMER**

TRENNMITTEL FÜR EIN OPTISCHES ISOMER

AGENT DE SÉPARATION POUR ISOMÈRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2012 JP 2012108689**

(43) Date of publication of application:
**18.03.2015 Bulletin 2015/12**

(73) Proprietors:
- **National University Corporation Nagoya University**
  **Nagoya-shi, Aichi 464-8601 (JP)**
- **Daicel Corporation**
  **Osaka-shi, Osaka 530-0011 (JP)**

(72) Inventors:
- **YASHIMA, Eiji**
  **Nagoya-shi, Aichi 464-8601 (JP)**
- **IIDA, Hiroki**
  **Nagoya-shi, Aichi 464-8601 (JP)**
- **TANG, Zhenglin**
  **Nagoya-shi, Aichi 464-8601 (JP)**
- **NAITO, Yuki**
  **Nagoya-shi, Aichi 464-8601 (JP)**

(74) Representative: **Grünecker Patent- und Rechtsanwälte**
**PartG mbB**
**Leopoldstraße 4**
**80802 München (DE)**

(56) References cited:
**WO-A1-2011/024718**
**JP-A- 2011 522 684**
**US-A1- 2011 121 229**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 848 932 B1

## Description

### TECHNICAL FIELD

The present invention relates to a separating agent for optical isomers, and to a separating agent for optical isomers having a polymer that has a helical structure.

### BACKGROUND ART

Optical isomers are used as pharmaceuticals or starting materials thereof. In applications where biological action is involved there is ordinarily used one given optical isomer alone, and the optical isomer must exhibit extremely high optical purity. Known methods for producing optical isomers of such required high optical purity include methods where one optical isomer is separated from a mixture of optical isomers, such as racemates, by using a column holding a separating agent for optical isomers having optical resolution ability, in chromatography such as process of liquid chromatography, simulated moving bed chromatography or supercritical fluid chromatography (for instance, Patent document 1).

Polymers having optically active sites can be used as separating agents for optical isomers. Such separating agents for optical isomers are ordinarily made up of a carrier such as silica gel, and the above polymer supported on the surface of the carrier, and are used for optical resolution while packed in a column tube.

Various polymers are known as polymers having optically active sites. Known instances of such polymers include, for example, polyaromatic isocyanide derivatives having a main-chain structure made up of a right-handed or left-handed helical structure that comprises identical monomers, the structure being obtained by living polymerization of an aromatic isonitrile having an amide group that results from amine-bonding of an optically active amino acid, or derivative thereof, to an aromatic ring (see, for instance, Patent document 2 and Non-patent document 1). Separating agents for optical isomers made up of such polyaromatic isocyanide derivatives are likewise known (Patent document 3).

Other known polymers having optically active sites include helical polymers that are obtained by polymerization of phenyleneacetylene monomers having cinchona alkaloids introduced therein through chemical bonding. In some known examples as well, such helical polymers are used as catalysts in organic synthesis (see, for instance, Non-patent document 2 and 3).

Patent document 4 describes an enantioselective zwitterionic ion-exchange material comprising a chiral selector component comprising at least one cation exchange group and at least one anion exchange group and a carrier, carrying said selector component directly or via a spacer.

Prior art documents

Patent document

Patent document 1: WO 02/030853
Patent document 2: WO 2007/063994
Patent document 3: WO 2011/024718
Patent document 4: US 2011/0121229

Non-patent document

Non-patent document 1: J. Am. Chem. Soc., 131, 6709 (2009)
Non-patent document 2: J. Poly. Sci. A, 49, 5192 (2011)
Non-patent document 3: ACS Macro Lett., 1, 261 (2012)

### DISCLOSURE OF THE INVENTION

The present invention provides a novel separating agent for optical isomers based on a helical polymer having optically active sites.

Known separating agents for optical isomers include various separating agents for optical isomers based on polymers having optically active sites. By virtue of the properties of the polymers, such separating agents for optical

isomers exhibit superior optical resolution characteristics in terms of solvent resistance and optical resolution ability. In some instances, however, the expected optical resolution ability may fail to be achieved, or optical resolution ability beyond expectation may be achieved, owing to factors that include the shape of the polymer and the positional relationship between effective functional groups during optical resolution.

The inventors found that a supported product resulting from supporting, on a carrier, a helical polymer having a cinchona alkaloid as a pendant group, exhibited optical resolution ability towards various optical isomers, and perfected the present invention on the basis of that finding.

[1] A separating agent for optical isomers, having a helical polymer that has a structure represented by Formula (I), and a carrier that supports the helical polymer, wherein the helical polymer is supported by the carrier.

[Chem. 1]

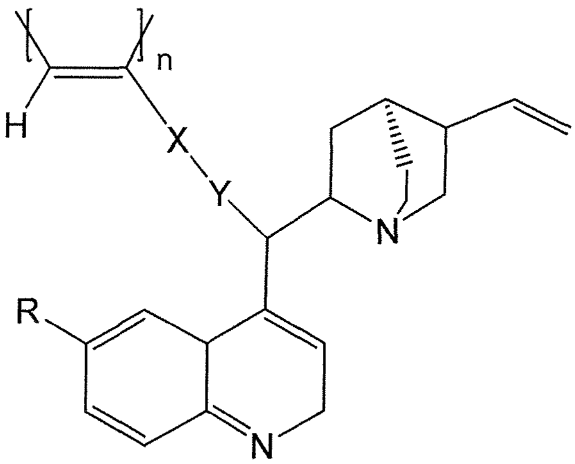

(I)

(In Formula (I), X represents a divalent aromatic group, a single bond or a methylene group; R represents hydrogen or a C1-C5 alkoxy; and n represents an integer equal to or higher than 5. When X is a divalent aromatic group, Y represents - CONH-, -COO-, -NHCONH-, -NHCSNH-, $-SO_2NH-$ or -NHCOO-, and when X is a single bond or a methylene group, Y represents -COO-, - NHCONH-, -NHCSNH- or -NHCOO-.)

[2] The separating agent for optical isomers according to [1], wherein X in Formula (I) is a divalent aromatic group, and Y is -CONH-, -COO-, -NHCONH-, -NHCSNH-, $-SO_2NH-$ or -NHCOO-.

[3] The separating agent for optical isomers according to [1], wherein X in Formula (I) is a single bond or a methylene group, and Y is -COO-, -NHCONH-, -NHCSNH- or -NHCOO-.

[4] The separating agent for optical isomers according to [1] or [2], wherein X in Formula (I) is a phenylene group, and Y is -CONH-.

[5] The separating agent for optical isomers according to any one of [1] to [4], wherein R in Formula (I) is hydrogen or a methoxy group.

[6] The separating agent for optical isomers according to any one of [1] to [5], wherein the carrier is silica gel.

In the separating agent for optical isomers of the present invention a helical polymer having the structure represented by Formula (I) is supported on a carrier. Accordingly, the present invention provides a novel separating agent for optical isomers based on a polymer having optically active sites.

## BRIEF DESCRIPTION OF THE DRAWINGS

Fig. 1(a) is a diagram illustrating the structure of a helical polymer according to the present invention (where aminated cinchonidine or quinine is used as a starting monomer), Fig. 1(b) is a diagram illustrating the structure of a helical polymer according to the present invention (where aminated cinchonine or quinidine is used as a starting monomer), and Fig. 1(c) is a diagram illustrating the structure of a helical polymer according to the present invention (where non-aminated cinchonine is used as a starting monomer); and

Fig. 2 is a diagram illustrating the structures of various substances that are optically separated using the separating agent for optical isomers of the present invention.

MODE FOR CARRYING OUT THE INVENTION

The separating agent for optical isomers of the present invention has a helical polymer having a structure represented by Formula (I), and a carrier that supports the helical polymer, wherein the helical polymer is supported by the carrier.

[Chem. 2]

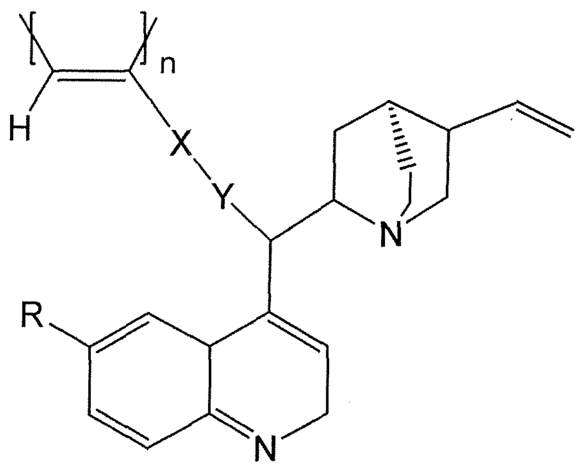

(I)

In Formula (I), X represents a divalent aromatic group, a single bond or a methylene group; R represents hydrogen or a C1-C5 alkoxy; and n represents an integer equal to or higher than 5. When X is a divalent aromatic group, Y represents -CONH-, -COO-, -NHCONH-, -NHCSNH-, -$SO_2$NH- or - NHCOO-, and when X is a single bond or a methylene group, Y represents -COO-, -NHCONH-, -NHCSNH- or -NHCOO-.

The helical polymer may be either left-handed or right-handed. Optical resolution by the separating agent for optical isomers of the present invention is accomplished through interactions between the helical polymer and the target substance of optical resolution, and accordingly the optical resolution ability of the separating agent for optical isomers of the present invention varies depending on the target substance. It is expected that optical resolution ability towards a specific target substance can be brought out, or enhanced, by prescribing the helical polymer to be of either screw direction, i.e. left-handed or right-handed.

In the above formula, X represents a divalent aromatic group, a single bond or a methylene group. The aromatic group may comprise heteroatoms such as oxygen, nitrogen or sulfur, or halogen atoms. The aromatic group may include a plurality of types, or may be of single type. From the viewpoint of ease of handling during production of the helical polymer, the number of carbon atoms of the aromatic group ranges preferably from 5 to 14, and more preferably from 6 to 10. Examples of such divalent aromatic group include, for instance, phenylene groups, and aromatic groups having one further binding site at any position of the monovalent groups illustrated below. Preferably, the divalent aromatic group is a single divalent aromatic group, from the viewpoint of ease of handling and in terms of the expected manifestation, or enhancement, of optical resolution ability towards a specific target substance. Concrete examples of such X include, for instance, phenylene groups.

[Chem. 3]

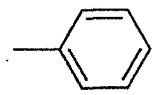
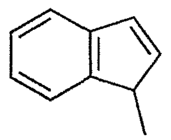
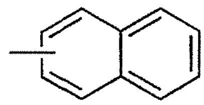
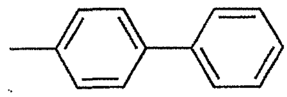
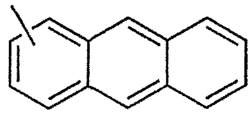
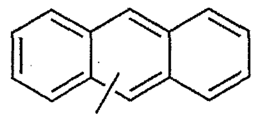
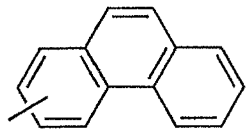
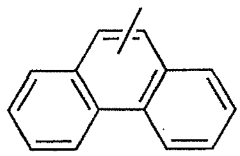
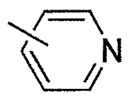
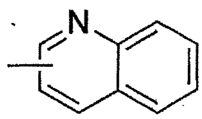

When the above X is a methylene group, the latter may have a substituent of small steric hindrance, but preferably the methylene group is unsubstituted, in order to reduce steric hindrance.

By virtue of the above X being a divalent aromatic group, a single bond or a methylene group, the polymer forms a helical structure, and the desired effect of the present invention can be elicited as a result.

Further, the above R in Formula (I) is hydrogen or a C1-C5 alkoxy group. Preferred examples of the C1-C5 alkoxy group include, for instance, methoxy groups, ethoxy groups, n-propoxy groups, isopropoxy groups, n-butoxy groups, isobutoxy groups, sec-butoxy groups, tert-butoxy groups and the like. Preferably, R is hydrogen or a methoxy group, from the viewpoint of ease of handling during production of the helical polymer, and in terms of the expected manifestation, or enhancement, of optical resolution ability towards a specific target substance.

Further, the above Y is -CONH-, -COO-, -NHCONH-, - NHCSNH-, -$SO_2$NH- or -NHCOO-. Such groups can be obtained through reaction of a compound having the below-described functional groups with a specific cinchona alkaloid.

By virtue of the above Y being selected from among the foregoing groups, the polymer forms a helical structure, and acquires with sites capable of hydrogen bonding and that are important in bringing out optical resolution ability. The desired effect of the present invention can be elicited as a result.

It suffices that the above n be equal to or higher than 5, but n is preferably large, in terms of bringing out or enhancing optical resolution ability. Preferably, n has a certain upper limit value, from the viewpoint of ease of handling during production of the helical polymer and during production of the separating agent for optical isomers. Given the above considerations, n ranges ordinarily from 100 to 700.

The number-average molecular weight (Mn) and the weight-average molecular weight (Mw) of the helical polymer are preferably large, in terms of bringing out or enhancing optical resolution ability, but have preferably certain upper limit values, from the viewpoint of solubility of the helical polymer in solvents. Given the above considerations, the molecular weight ranges preferably from 20,000 to 1,000,000. The molecular weight dispersity (Mw/Mn) of the helical polymer is not particularly limited, so long as the screw direction of the helical polymer is one and the same.

The Mn, Mw and Mw/Mn of the helical polymer can be determined by size-exclusion chromatography (SEC). In addition to SEC, the above n can be worked out by identifying the constituent units of the helical polymer by relying on ordinary structural analysis means such as NMR and IR.

The Mn and Mw of the helical polymer can be adjusted by adjusting the molar ratio of the polymerization initiator and monomers that are used, in the below-described polymerization step, to lie in the range of 10 to 1000.

For instance, the Mn and/or Mw of the helical polymer can be made larger by increasing the molar ratio of the polymerization initiator and the monomer.

The helical polymer can be produced, for instance, in accordance with the method below.

Firstly there is prepared a cinchona alkaloid known to be an optically active molecule.

Commercially available quinine, quinidine, cinchonine, cinchonidine or the like can be used as the cinchona

alkaloid.

If the above Y is -CONH-, -NHCONH-, -NHCSNH- or -$SO_2$NH-, a product obtained by aminating beforehand a cinchona alkaloid may be used as a starting material.

A known method can be resorted to for amination, for instance the method disclosed in Tetrahedron: Asymmetry., 6, 1699, (1995) or the method disclosed in Japanese Patent Application Publication No. 2010-24173. These methods allow synthesizing 9-amino cinchona alkaloids.

The cinchona alkaloids are used unmodified in a case where the above Y is -COO- or -NHCOO-.

In a case where the above X is a divalent aromatic group, respective monomers are synthesized by reacting the aminated 9-amino cinchona alkaloid with an aromatic carboxylic acid having an ethynyl group (case where Y is -CONH-), an aromatic isocyanate having an ethynyl group (case where Y is - NHCONH-), an aromatic isothiocyanate having an ethynyl group (case where Y is -NHCSNH-) or an aromatic sulfonic acid halide having an ethynyl group (case where Y is -$SO_2$NH-), or by reacting a non-aminated cinchona alkaloid with an aromatic carboxylic acid halide having an ethynyl group (case where Y is -COO-) or an aromatic isocyanate having an ethynyl group (case where Y is -NHCOO-).

In a case where the above X is a single bond or a methylene group, respective monomers are synthesized by converting the amino group of the aminated 9-amino cinchona alkaloid to isocyanate, thiocyanate or chloroformate, followed by reaction with an amine having an ethynyl group (case where Y is -NHCONH-, -NHCSNH- or -NHCOO-), or by reacting a non-aminated cinchona alkaloid with an aromatic carboxylic acid halide having an ethynyl group, or a carboxylic acid having an ethynyl group (case of -COO-), in the presence of a condensing agent.

Examples of the aromatic ring that makes up the divalent aromatic group include, for instance, the aromatic rings below.

[Chem. 4]

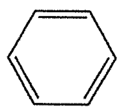
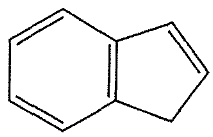
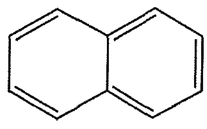
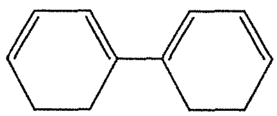
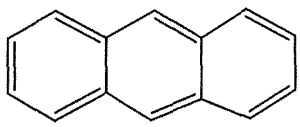
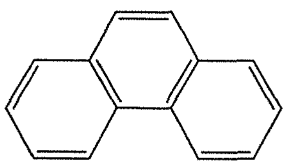
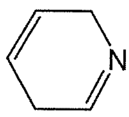
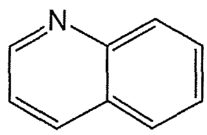

Examples of halogens in the above-described aromatic carboxylic acid halide, aromatic sulfonic acid halide and alkylcarboxylic halide include bromine, chlorine and iodine, preferably chlorine in terms of ready availability. Concrete examples of aromatic carboxylic acids having an ethynyl group include, particularly preferably 4-ethynylbenzoic acid.

Concrete examples of aromatic isocyanates having an ethynyl group include, for instance, 4-ethynylphenylisocyanate.

Concrete examples of aromatic isothiocyanates having an ethynyl group include, for instance, 4-ethynylphenylthioisocyanate.

Concrete examples of aromatic sulfonic acid halides having an ethynyl group include, for instance, 4-ethynylbenzenesulfonic acid chloride.

Particularly preferably, for instance, the aromatic carboxylic halide having an ethynyl group is 4-ethynylbenzoyl chloride.

Concrete examples of amines having an ethynyl group include, for instance, propargylamine.

Concrete examples of carboxylic halides having an ethynyl group include, for instance, propionyl chloride.

Concrete examples of carboxylic acids having an ethynyl group include, for instance, 3-butynoic acid.

For instance, the monomers represented by Formula (II) or (III) below can be synthesized by reacting an aromatic carboxylic acid having an ethynyl group and an aminated cinchona alkaloid (9-amino cinchona alkaloid) in a solvent such as THF, using 4-(4,6-dimethoxy-1,3,5-triazin-2-yl)-4-methylmorpholinium chloride (hereafter also referred

to as DMT-MM) as a condensing agent.

[Chem. 5]

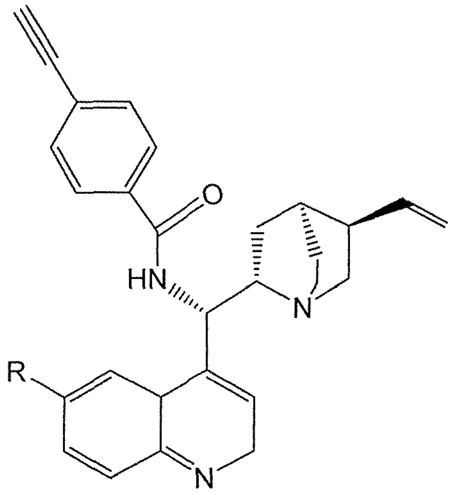

(II)

[Chem. 6]

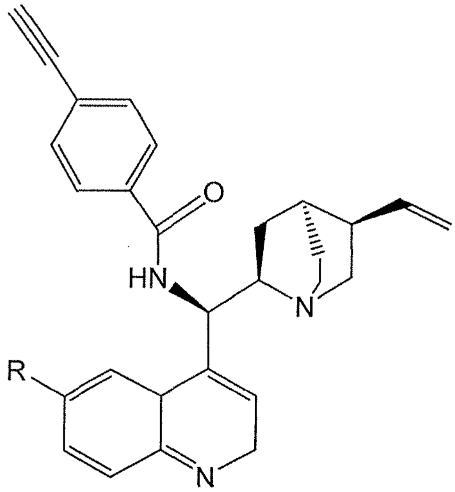

(III)

In Formulas (II) and (III), R has the same meaning as above.

A monomer having the above X (divalent aromatic group) and Y (-NHCONH-, -NHCSNH- or $-SO_2NH-$) can be synthesized by reacting an aromatic isocyanate having an ethynyl group or aromatic thiocyanate having an ethynyl group in a solvent such as THF, or reacting an aromatic sulfonic acid halide having an ethynyl group in a solvent such a dichloromethane, in the presence of triethylamine (hereafter also notated as $NEt_3$), with an aminated cinchona alkaloid (9-amino cinchona alkaloid) that is used as a starting material, similarly to the synthesis of the monomer represented by Formula (II) or (III) above.

Further, a monomer having the above X (single bond or methylene group) and Y (-NHCONH- or -NHCSNH-) can be synthesized by treating an aminated cinchona alkaloid (9-amino cinchona alkaloid) with phosgene or thiophosgene in a solvent such as THF, to convert the amino group into an isocyanate group or thiocyanate group, followed by reaction with the above-described amine having an ethynyl group.

A monomer represented by Formula (IV) or (V) can be synthesized by reacting the above-described aromatic carboxylic halide having an ethynyl group with a cinchona alkaloid, in a solvent such as THF, using triethylamine (hereafter also notated as $NEt_3$).

[Chem. 7]

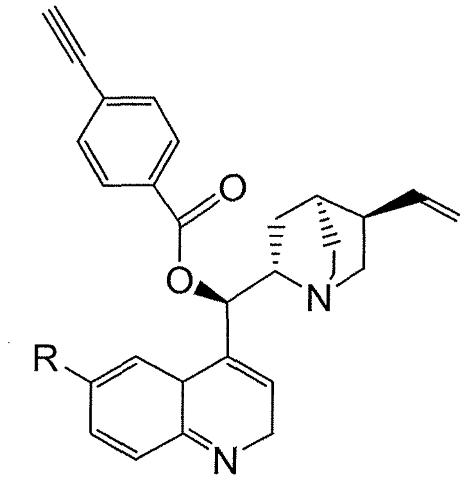

(IV)

[Chem. 8]

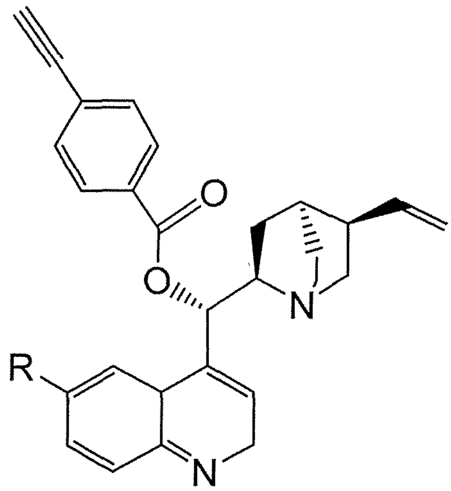

(V)

In Formulas (IV) and (V), R has the same meaning as above.

A monomer having X (single bond or methylene group) and Y (-COO-) can be synthesized by reacting a cinchona alkaloid and an carboxylic halide having an ethynyl group in accordance with the same procedure as in the monomer represented by Formula (IV) or (V) above.

A monomer having the above X (divalent aromatic group) and Y (-NHCOO-) can be synthesized by reacting a cinchona alkaloid and an aromatic isocyanate having an ethynyl group, in a solvent such as THF. A monomer having the above X (single bond or methylene group) and Y (-NHCOO-) can be synthesized by treating a cinchona alkaloid with triphosgene in a solvent such as THF, to convert the hydroxyl group to chloroformate groups, followed by reaction with an amine having an ethynyl group.

A helical polymer represented by Formula (I) can be obtained by performing a polymerization reaction, for 17 to 26 hours, at about 30°C, in a nitrogen atmosphere, of the synthesized monomers above represented by Formulas (II) to (V), using $[Rh(nbd)Cl]_2$ (nbd: norbornadiene) as a catalyst, and using, as a solvent, dimethylformamide (DMF) having triethylamine added thereto.

The circular dichroism of the helical polymer can be adjusted by adjusting the temperature during polymerization.

In a case where the aromatic ring that makes up the aromatic carboxylic acid having an ethynyl group or the aromatic carboxylic halide having an ethynyl group is benzene, the above Y is a phenylene group, and the synthesized helical polymer is polyphenylacetylene having the cinchona alkaloid as a pendant group.

The specific structural formula is as given below. The helical polymers represented by Formulas (VI) and (VII) result from polymerization of monomers that are synthesized using an aminated cinchona alkaloid. The helical polymers represented by Formulas (VIII) and (IX) result from polymerization of monomers that are synthesized using a non-aminated cinchona alkaloid. In Formulas (VI) to (IX), n ranges ordinarily from 100 to 700.

[Chem. 9]

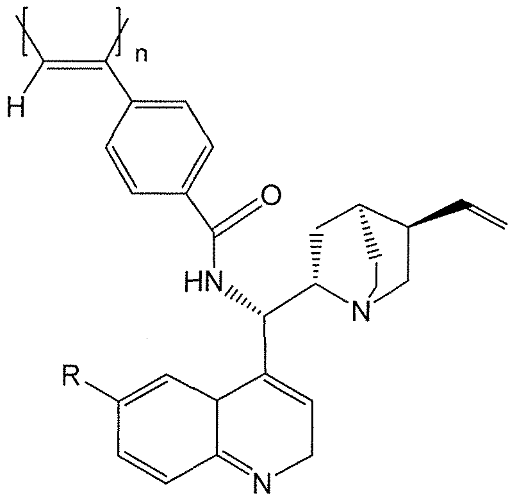

(VI)

In Formula (VI), R is hydrogen (poly-ACd) when cinchonidine is used as the starting substance, and is a methoxy group (poly-AQn) when quinine is used.

[Chem. 10]

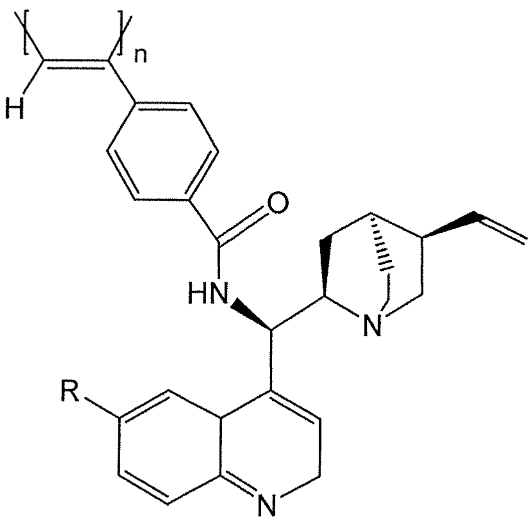

(VII)

In Formula (VII), R is hydrogen (poly-ACn) when cinchonine is used as the starting substance, and is a methoxy group (poly-AQd) when quinidine is used.

[Chem. 11]

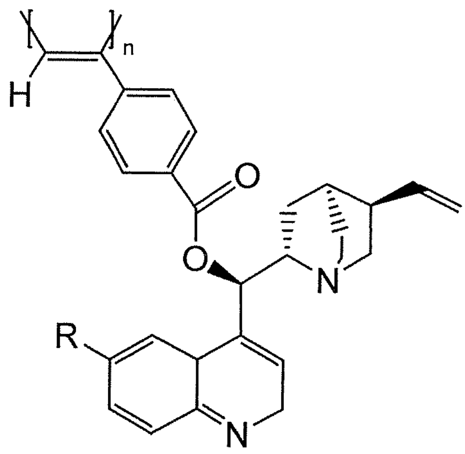

(VIII)

In Formula (VIII), R is hydrogen (poly-Cd) when cinchonidine is used as the starting substance, and is a methoxy group (poly-Qn) when quinine is used.

[Chem. 12]

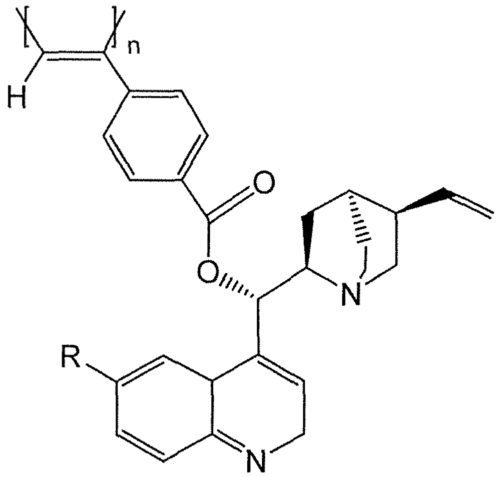

(IX)

In Formula (IX), R is hydrogen (poly-Cn) when cinchonine is used as the starting substance, and is a methoxy group (poly-Qd) when quinidine is used.

The screw direction of the helical polymer can be worked out from the sign of the CD spectrum. Specifically, a positive peak in the CD spectrum in the vicinity of 400 to 530 nm, which is the main-chain absorption band of the above helical polymers, indicates that the helical polymer is left-handed, whereas a negative peak in the CD spectrum in the vicinity of 400 to 530 nm indicates that the helical polymer is right-handed.

The helical polymer is supported on a carrier. A carrier can be used herein that is packed in a column tube and that has chemical and physical durability for optical resolution. Known carriers of separating agents for optical isomers can be used herein as the above carrier. Specific examples thereof include inorganic carriers such as silica, alumina, magnesia, glass, kaolin, titanium oxide, silicates, hydroxyapatite and the like, and organic carriers such as polystyrene, polyacrylamide, polyacrylate and the like. Preferably, the carrier is porous, in terms of enhancing the optical resolution ability towards the target substance. The carrier may be particulate, or may be of integrated type by being integrally packed in the column tube, but is preferably particulate from the viewpoint of production of the separating agent for optical isomers and ease of handling during production. Silica gel is a concrete example of such a carrier.

A carrier having a particle size ranging ordinarily from 3 to 15 μm is used herein.

The helical polymer becomes supported on (fixed to) the carrier through physical adsorption onto the surface of the latter. Such physical adsorption can be accomplished by dipping the carrier into a solution that contains the helical

polymer, and distilling off the solvent thereafter.

The amount of helical polymer supported on the carrier ranges ordinarily from 10 to 30 parts by weight, preferably from 15 to 25 parts by weight, with respect to 100 parts by weight as the total of separating agent.

The carrier may be subjected to a surface treatment. Such a surface treatment can be performed, as appropriate, by resorting to known techniques in accordance with the type of carrier. In a case where, for instance, the carrier is silica, examples of surface treatment agents include, for instance, organosilicon compounds having amino groups or glycidyl groups.

By using the separating agent for optical isomers of the present invention as a filler in various types of chromatography, such as HPLC, simulated moving bed chromatography, supercritical fluid chromatography and the like, it becomes possible to use the separating agent for optical isomers of the present invention in optical resolution and thereby in production of optical isomers. A liquid such as various organic solvents, mixed solvents thereof, and mixed solvents of organic solvents and water can be used as the mobile phase, in such optical resolution. In particular, a solvent having high solubility such as THF, is used as a mobile phase, such that optical resolution ability towards optical isomers of various structures can be expected to be brought out depending on the type and composition of the mobile phase.

## EXAMPLES

Examples of the present invention will be explained next.

In the examples below, NMR spectra were measured using a Varian VXR-500S spectrometer (by Varian), operated at 500 MHz, and using tetramethylsilane (TMS) as an internal standard.

Further, IR spectra were measured using a JASCO FT/IR-680 spectrophotometer (by JASCO Corporation).

Absorption spectra and circular dichroism (CD) spectra were measured using a JASCO V570 spectrophotometer and a JASCO J820 spectropolarimeter, respectively, in a quartz cell having an optical path length of 1.0 cm, at 25°C. The temperature was adjusted using a Peltier-type thermostatic cuvette holder (JASCO PTC-423).

Polymer concentrations were calculated on the basis of monomer units.

Optical rotation was measured using a JASCO P-1030 polarimeter, in a quartz cell having an optical path length of 2.0 cm.

The number-average molecular weight (Mn) and the weight-average molecular weight (Mw) of the polymers were obtained by size-exclusion chromatography (SEC). Herein, SEC was performed using a JASCO PU-908 liquid chromatograph equipped with an ultraviolet-visible detector (JASCO UV-1570, 280 nm) and with a column oven (JASCO CO-1565).

The column that was utilized was a double Tosoh TSKgel Multipore $H_{XL}$-M SEC column (30 cm, by Tosoh Corporation), and the eluent used was trichloromethane/2,2,2-trifluoroethanol (9/1:v:v) containing 0.5wt% of tetra-n-butylammonium bromide (TBAB), with a flow rate set to 0.5 mL/min. A molecular weight calibration curve was obtained using polystyrene standards (by Tosoh Corporation).

Chiral HPLC analysis was performed using a JASCO PU-908 liquid chromatograph equipped with a multi UV-visible detector (JASCO MD-2010 Plus) and an optical rotation detector (JASCO OR-2090 Plus), using a Chiralcell OD column or Chiralcell OJ-H column (0.46 cm (i.d.) ×25cm, by DAICEL). The eluent used was 2-propanol/n-hexane.

Mass analysis was performed by ESI-MS. Laser Raman spectra were acquired using a JASCO RMP-200 spectrophotometer.

### Synthesis of aminated cinchona alkaloids

Aminated cinchonidine (ACd), aminated cinchonine (ACn), aminated quinine (AQn) and aminated quinidine (AQd) were synthesized in accordance with previous reports (Tetrahedron: Asymmetry., 6, 1699 (1995), Eur. J. Org. Chem., 2119 (2000), Eur. J. Org. Chem., 3449 (2010)). The cinchonidine, cinchonine, quinine and quinidine that were used as starting materials were purchased from commercial sources.

### Monomer synthesis

Monomers as starting materials for synthesizing the below-described polymers were synthesized for the various aminated cinchona alkaloids and a non-aminated cinchona alkaloid.

(Synthesis example 1: synthesis of a monomer of aminated cinchonidine)

Herein, 4-(4,6-dimethoxy-1,3,5-triazin-2-yl)-4-methylmorpholinium chloride (hereafter also referred to as DMT-MM: 3.39 g 12.3 mmol) was added to anhydrous THF (35 mL) comprising (4-carboxyphenyl)acetylene (896 mg, 6.13 mmol) and ACd (1.80 g, 6.13 mmol), with stirring overnight at room temperature. Then, water (500 mL) was added to

the reaction mixture, and the resulting mixture was extracted using ethyl acetate (250 mL×5). The organic layer was washed with brine (200 mL×5) and was dehydrated overnight using $Na_2SO_4$. After filtration, the solvent was distilled off, and the residue was purified by column chromatography ($SiO_2$, trichloromethane/methanol =1/0 to 20/3, v/v, and then NH-$SiO_2$, ethyl acetate /n-hexane=2/1,v/v), to yield a monomer (M-ACd:1.61 g, 62%) in the form of a white solid. The properties of the monomer are given below.

<M-ACd>

Melting point 237-238 °C. IR (film, cm$^{-1}$): 3296 ($\nu_{N-H}$), 2104 ($\nu_{C\equiv C}$), 1637 ($\nu_{C=O}$). $^1$H NMR (500 MHz, $CDCl_3$) : δ8.89 (d, J = 4.6 Hz, 1H, Ar), 8.46 (d, J = 8.6 Hz, 1H, Ar), 8.14 (d, J =7.5 Hz, 1H, Ar), 7.86 (bs, 1H, -NHCH-), 7.76-7.72 (m, 3H, Ar), 7. 64 (t, J = 7.9 Hz, 1H, Ar), 7.54-7.52 (m, 2H, Ar), 7.50 (d, J = 4.5 Hz, 1H, Ar), 5.74-5.67 (m, 1H, -CH=$CH_2$), 5.41 (bs, 1H, -NHCH-), 5.00-4.94 (m, 2H, -CH=$CH_2$), 3.32-3.27 (m, 1H), 3.19 (s, 1H), 3.18-3.03 (m, 2H), 2.80-2.70 (m, 2H), 2.35-2.29 (m, 1H), 1.72-1.59 (m, 3H), 1.44-1.37 (m, 1H), 1.07-1.02 (m, 1H). $^{13}$C NMR (125 MHz, $CDCl_3$): δ166.7, 150.2, 148.8, 141.33, 141.32, 134.0, 132.4, 130.7, 129.3, 127.3, 126.9, 125.7, 123.3, 119.5, 114.85, 114.81, 82.9, 79.7, 60.6, 56.2, 40.9

Monomers (ACn, AQn and AQd) of other aminated cinchona alkaloids were synthesized in accordance with the same operation as that of the method of Synthesis example 1. The properties of the monomers are given below.

<M-ACn>

Yield: 31%. Melting point 112-114 °C. IR (film, cm$^{-1}$): 3297 ($\nu_{N-H}$), 2105 ($\nu_{C\equiv C}$), 1637 ($\nu_{C=O}$). $^1$H NMR (500 MHz, $CDCl_3$) : δ8.88 (d, J = 4.5 Hz, 1H, Ar), 8.42 (d, J = 8.4 Hz, 1H, Ar), 8.14 (dd, J = 8.5 Hz, 1H, Ar), 7.90 (bs, 1H, -NHCH-), 7.77-7.71 (m, 3H, Ar), 7.62 (t, J = 7.4 Hz, 1H, Ar), 7.54-7.53 (m, 2H, Ar), 7.49 (d, J = 4.6 Hz, 1H, Ar), 5.97-5.90 (m, 1H, - CH=$CH_2$), 5.39 (bs, 1H, -NHCH-), 5.20-5.10 (m, 2H, -CH=$CH_2$), 3.19 (s, 1H), 3.07-2.95 (m, 5H), 2.87-2.80 (m, 1H), 2.36-2.29 (m, 1H), 1.69 (bs, 1H), 1.55-1.48 (m, 1H), 1.45-1.38 (m, 1H), 1.05-0.97 (m, 1H). $^{13}$C NMR (125 MHz, $CDCl_3$): δ 166.7, 150.2, 148.8, 140.3, 140.2, 134.1, 132.4, 130.7, 129.3, 127.3, 126.8, 125.6, 123.3, 119.4, 115.23, 115.21, 82.9, 79.7, 60.6, 49.47, 49.45, 47.2, 39.3, 27.4, 26.8, 25.5. HRMS (ESI+): m/z calcd for $C_{28}H_{27}N_3O$ (M+H$^+$), 422.2232; found, 422.2252. Anal. Calcd (%) for $C_{28}H_{27}N_3O$: C, 79.78; H, 6.46; N, 9.97. Found: C, 79.80; H, 6.49; N, 9.97.

<M-AQn>

Yield: 92%. Melting point 231-233 °C. IR (film, cm$^{-1}$): 3295 ($\nu_{N-H}$), 2105 ($\nu_{C\equiv C}$), 1637 ($\nu_{C=O}$). $^1$H NMR (500 MHz, $CDCl_3$) : δ8.71 (d, J = 4.5 Hz, 1H, Ar), 8.03 (d, J = 9.2 Hz, 1H, Ar), 7.81 (bs, 1H, -NHCH-), 7.76-7.72 (m, 3H, Ar), 7.50 (d, J = 8.4 Hz, 2H, Ar), 7.40-7.37 (m, 2H, Ar), 5.76-5.69 (m, 1H, -CH=$CH_2$), 5.41 (bs, 1H, -NHCH-), 5.00-4.94 (m, 2H, -CH=$CH_2$), 3.98 (s, 3H, -$OCH_3$), 3.31-3.26 (m, 1H), 3.19 (s, 1H), 3.20-3.14 (m, 2H), 2.77-2.71 (m, 2H), 2.31 (bs, 1H), 1.70-1.61 (m, 3H), 1.48 (t, J = 11.6 Hz, 1H), 1.05-1.01 (m, 1H). $^{13}$C NMR (125 MHz, $CDCl_3$): δ 166.5, 157.9, 147.8, 145.0, 141.34, 141.31, 134.0, 132.4, 132.1, 128.4, 127.3, 125.7, 121.6, 114.9, 114.8, 102.0, 82.9, 79.7, 60.3, 56.2, 55.8, 41.1, 39.7, 31.7, 28.1, 27.5, 26.3. HRMS (ESI+) : m/z calcd for $C_{29}H_{29}N_3O_2$ (M+H$^+$), 452.2338; found, 452.2356. Anal. Calcd (%) for $C_{29}H_{29}N_3O_2$: C, 77.13; H, 6.47; N, 9.31. Found: C, 76.99; H, 6.41; N, 9.29.

<M-AQd>

Yield: 46%. Melting point 114-116 °C. IR (film, cm$^{-1}$): 3295 ($\nu_{N-H}$), 2103 ($\nu_{C\equiv C}$), 1638 ($\nu_{C=O}$). $^1$H NMR (500 MHz, $CDCl_3$) : δ8.73 (d, J = 4.6 Hz, 1H, Ar), 8.02 (d, J = 9.2 Hz, 1H, Ar), 7.87 (bs, 1H, -NHCH-), 7.77 (d, J = 8.3 Hz, 2H, Ar), 7.64 (d, J = 2.7 Hz, 1H, Ar), 7.54 (d, J = 8.6 Hz, 2H, Ar), 7.43 (d, J = 4.6 Hz, 1H, Ar), 7.39-7.37 (m, 1H, Ar), 5.98-5.91 (m, 1H, - CH=$CH_2$), 5.37 (bs, 1H, -NHCH-), 5.16-5.13 (m, 2H, -CH=$CH_2$), 3.98 (s, 3H, -$OCH_3$), 3.19 (s, 1H), 3.11-2.91 (m, 5H), 2.36-2.34 (m, 1H), 1.73 (bs, 1H), 1.64-1.52 (m, 2H), 1.47-1.42 (m, 1H), 1.10-1.05 (m, 1H). $^{13}$C NMR (125 MHz, $CDCl_3$): δ166.5, 157.9, 147.7, 145.0, 140.54, 140.52, 134.0, 132.4, 132.0, 128.3, 127.3, 125.6, 122.1, 115.01, 114.99, 101.3, 82.9, 79.7, 60.6, 55.64, 55.59, 49.5, 47.1, 39.1, 27.4, 26.9, 25.6. HRMS (ESI+): m/z calcd for $C_{29}H_{29}N_3O_2$ (M+H$^+$), 452.2338; found, 452.2320. Anal. Calcd (%) for $C_{29}H_{29}N_3O_2$: C,77.13; H, 6.47; N, 9.31. Found: C, 76.97; H, 6.45; N, 9.28.

(Synthesis example 2: synthesis of a monomer of a non-aminated cinchona alkaloid (cinchonine))

Herein, anhydrous THF (50 mL) comprising 4-ethynylbenzoyl chloride (1.80 g,11.0 mmol) was dropped onto a mixed solution of cinchonine (2.94,10.0 mmol) and triethylamine (2.78 mL, 20.0 mmol) and anhydrous THF (100 mL), in a nitrogen atmosphere at 0°C, followed by stirring overnight at room temperature. The obtained suspension was filtered, the solvent was distilled off the mother liquor, and the obtained yellow solid was purified by column chromatography ($SiO_2$, trichloroethane/ethyl acetate =1/3, v/v) and recrystallization (ethyl acetate /n-hexane=1/4, v/v), to yield a

monomer (M-Cn: 2.99 g, 71%) in the form of a white solid. The properties of the monomer are given below.

Melting point 144-146 °C. IR (film, $cm^{-1}$): 3278 ($\nu_{\equiv C-H}$), 3067 ($\nu_{=C-H}$), 2103 ($\nu_{C\equiv C}$), 1715 ($\nu_{C=O}$). $^1H$ NMR (500 MHz, $CDCl_3$): δ8.88 (d, J = 4.5 Hz, 1H, Ar), 8.29 (d, J = 8.0 Hz, 1H, Ar), 8.13 (dd, J = 8.5, 0.9 Hz, 1H, Ar), 8.05-8.03 (m, 2H, Ar), 7.74-7.71 (m, 1H, Ar), 7.65-7.61 (m, 1H, Ar), 7.58-7.56 (m, 2H, Ar), 7.45 (d, J = 4.6 Hz, 1H, Ar), 6.77 (d, J = 7.4 Hz, 1H,-OCH-), 6.05-5.98 (m, 1H, $-CHCH_2$), 5.14-5.07 (m, 2H, $-CHCH_2$), 3.47-3.42 (m, 1H), 3.25 (s, 1H, -CCH), 2.99-2.90 (m, 2H), 2.83-2.69 (m, 2H), 2.31-2.26 (m, 1H), 1.97-1.92 (m, 1H), 1.86 (bs, 1H), 1.68-1.56 (m, 3H). 13C NMR (125 MHz, $CDCl_3$) : 165.1, 150.1, 148.7, 145.6, 140.3, 132.4, 130.7, 129.8, 129.7, 129.4, 127.4, 127.1, 126.2, 123.4, 118.7, 115.1, 82.8, 80.6, 74.8, 60.0, 50.0, 49.3, 39.8, 27.8, 26.6, 24.2. HRMS (ESI+): m/z calcd for $C_{28}H_{26}N_2O_2$ ($M+H^+$), 423.2073; found, 423.2064. Anal. Calcd (%) for $C_{28}H_{26}N_2O_2$: C,79..59; H, 6.20; N, 6.63. Found: C, 79.59; H, 6.22; N, 6.36.

Polymerization

Polymerization of the M-ACd, M-ACn, M-AQn and M-AQd above was carried out using $[Rh(nbd)Cl]_2$ as a catalyst, in a dry glass ampoule filled with a dry nitrogen atmosphere. The concrete operation was as follows.

The monomer M-ACd (422 mg, 1.00 mmol) was transferred to the dry ampoule. The latter was deaerated using a vacuum line, and was then filled with nitrogen. This operation was repeated three times, a three-way stopcock was fitted to the ampoule, and then anhydrous dimethylformamide (DMF: 4.20 mL) and triethylamine ($NEt_3$: 140 μL, 1.00 mmol) were added using a syringe. Then a DMF solution (0.0125 M) (0.8 mL) of $[Rh(nbd)Cl]_2$ was added thereto, at 30°C. The concentrations of the monomer and the rhodium catalyst were 0.2 M and 0.002 M, respectively.

After 26 hours, the generated polymer (poly-ACd) was precipitated in excess diethyl ether, the precipitate was washed with diethyl ether, and was collected by centrifugation.

The product was purified by re-precipitation from trichloromethane in diethyl ether, the precipitated poly-ACd was washed with diethyl ether, and was dried overnight in vacuum, at room temperature (312 mg, yield 74%). The same operation was followed to prepare poly-ACn, poly-AQn and poly-AQd.

The Mn and Mw/Mn of the polymer were measured by SEC.

Information relating to polymerization of the polymers is given below.

Polymerization of M-Cn above was carried out using $[Rh(nbd)Cl]_2$ as a catalyst, in a dry glass ampoule filled with a dry nitrogen atmosphere. The concrete operation was as follows.

The monomer M-Cn (886 mg, 2.10 mmol) was transferred to the dry ampoule. The latter was deaerated using a vacuum line, and was then filled with nitrogen. This operation was repeated three times, a three-way stopcock was fitted to the ampoule, and then anhydrous dimethylformamide (DMF: 9.0 mL) and triethylamine ($NEt_3$: 290 μL, 2.10 mmol) were added using a syringe. Then a DMF solution (0.014 M) (1.5 mL) of $[Rh(nbd)Cl]_2$ was added thereto, at 30°C. The concentrations of the monomer and the rhodium catalyst were 0.2 M and 0.002 M, respectively.

After 18 hours, the generated polymer (poly-Cn) was precipitated in excess diethyl ether, the precipitate was washed with diethyl ether, and was collected by centrifugation. The product was purified through re-precipitation from trichloromethane in diethyl ether, the precipitated poly-Cn was washed with diethyl ether, and was dried overnight in vacuum, at room temperature (770 mg, yield 87%). The Mn and Mw/Mn of the polymers were measured by SEC. The properties of the polymer are given below.

Spectroscopic data of the polymer are given below.

<poly-ACd>

IR (film, $cm^{-1}$): 3327 ($\nu_{N-H}$), 1652 ($\nu_{C=O}$). $^1H$ NMR (500 MHz, $CDCl_3/CF_3CD_2OD$ (31/1, v/v), 55°C) : δ8.60 (s, 2H, -NHCH-, Ar), 8.44 (s, 2H, Ar), 8.06 (s, 2H, Ar), 7.77-7.39 (m, 5H, Ar), 6.66 (s, 1H, -NHCH-), 5.80-5.38 (m, 2H, $-CH=CH_2$), 4.94 (s, 2H,$-CH=CH_2$), 3.34-2.64 (m, 3H), 2.59-1.80 (m, 3H), 1.66-0.84 (m, 5H). Anal. Calcd (%) for $(C_{28}H_{27}N_3O\cdot 5/3H_2O)n$: C, 74.48; H, 6.77; N, 9.31. Found: C, 74.63; H, 6.59; N, 9.09.

<poly-ACn>

IR (film, $cm^{-1}$): 3309 ($\nu_{N-H}$), 1647 ($\nu_{C=O}$).$^1H$ NMR (500 MHz, $CDCl_3/CF_3CD_2OD$ (31/1, v/v), 55°C) : δ8.81 (s, 2H, -NHCH-, Ar), 8.42 (s, 2H, Ar), 8.12 (s, 2H, Ar), 7.80-7.35 (m, 5H, Ar), 6.24-5.38 (m, 3H, -NHCH-, $-CH=CH_2$), 5.15 (s, 2H, $-CH=CH_2$), 3.23-2.73 (m, 3H), 2.57-1.77 (m, 3H), 1.68-0.83 (m, 5H). Anal. Calcd (%) for $(C_{28}H_{27}N_3O)n$: C, 79.78; H, 6.46; N, 9.97. Found: C, 79.98; H, 6.64; N, 9.98.

<poly-AQn>

IR (film, $cm^{-1}$): 3326 ($\nu_{N-H}$, 1652 ($\nu_{C=O}$). $^1H$ NMR (500 MHz, $CDCl_3/CF_3CD_2OD$ (31/1, v/v), 55°C): δ8.65 (s, 1H,

-NHCH-), 8.50 (s, 2H, Ar), 7.96 (s, 2H, Ar), 7.69 (s, 1H, Ar), 7.46-7.04 (m, 4H, Ar), 6.69 (s, 1H, -NHCH-), 5.57 S6 (s, 1H, $-CH=CH_2$), 5.37 (s, 1H), 4.94 (s, 2H, $-CH=CH_2$), 3.91 (s, 3H, $-OCH_3$), 3.07-2.79 (m, 3H), 2.48-1.94 (m, 3H), 1.63-0.86 (m, 5H). Anal. Calcd (%) for $(C_{29}H_{29}N_3O_2 \cdot H_2O)n$: C, 74.18; H, 6.65; N, 8.95. Found: C, 74.36; H, 6.67; N, 8.88.

<poly-AQd>

IR (film, $cm^{-1}$) : 3310 ($\nu_{N-H}$), 1646 ($\nu_{C=O}$). $^1H$ NMR (500 MHz, $CDCl_3/CF_3CD_2OD$ (31/1, v/v), 55°C) : $\delta$8.65 (s, 1H, -NHCH-), 8.34 (s,2H, Ar), 7.92 (s, 2H, Ar), 7.59 (s, 1H, Ar), 7.46-7.04 (m, 4H, Ar), 6.64 (s, 1H, -NHCH-), 5.81 (s, 1H, $-CH=CH_2$), 5.55 (s, 1H), 5.02 (s, 2H, $-CH=CH_2$), 3.86 (s, 3H, $-OCH_3$), 3.10-2.52 (m, 3H), 2.33-1.97 (m, 3H), 1.63-0.88 (m, 5H). Anal. Calcd (%) for $(C_{29}H_{29}N_3O_2 \cdot 0.7H_2O)n$: C, 75.04; H, 6.60; N, 9.05. Found: C, 75.01; H, 6.40; N, 8.92.

<poly-Cn>

IR (film, $cm^{-1}$): 1719 ($\nu_{C=O}$). $^1H$ NMR (500 MHz, $CDCl_3$, 50°C) : $\delta$8.82 (s, 1H, Ar), 8.21 (s, 1H, Ar), 7.76-7.46 (m, 4H, Ar), 7.35 (s, 1H, Ar), 6.98-6.77 (m, 3H, Ar, -OCH-), 5.73 (s, 1H), 5.42 (s, 1H), 4.84 (s, 1H), 4.48 (s, 1H), 3.10-2.40 (m, 3H), 1.63-0.84 (m, 8H). Anal. Calcd (%) for $(C_{28}H_{26}N_2O_2)n$: C, 79.59; H, 6.20; N, 6.63. Found: C, 79.33; H, 6.35; N, 6.43.

Production of a separating agent for optical isomers

The synthesized poly-AQn, poly-AQd, poly-ACd, poly-ACn and poly-Cn above (Fig. 1) were synthesized in accordance with previous reports. The number-average molecular weight ($M_n$) and polydispersity ($M_w/M_n$) of the polymers were measured using the above-described devices and in accordance with the above-described conditions. The below values were obtained as a result. Poly-AQn: Mn = $3.1 \times 10^5$, Mw/Mn = 3.1, poly-AQd: Mn=$9.3\times10^4$, Mw/Mn =1.9, poly-ACd: Mn=$1.4\times10^5$, Mw/Mn =2.4, Poly-ACn: Mn=$9.3\times10^4$, Mw/Mn = 2.1, Poly-Cn: Mn = $3.9\times10^4$, Mw/Mn =4.7

Herein, 0.75 g of silica gel (particle size 7 $\mu$m, average pore size 100 nm) treated with aminopropyltriethoxysilane were homogeneously coated with 0.25g of poly-AQn dissolved in a mixed solvent of chloroform /2,2,2-trifluoroethanol=90/10 (v/v). Thereafter, the solvent was distilled off under reduced pressure, to yield a filler for optical isomers of silica gel coated with poly-AQn. This filler was pressure-packed into a 25cm$\times$0.20cm column made of stainless steel, in accordance with a slurry filling method, to produce a column. The same procedure was followed to produce columns filled with silica gel coated with poly-AQd, poly-ACd, poly-ACn, and poly-Cn. Chiral discrimination ability (retention factor $k_1$', separation factor) for the compounds illustrated in Fig. 2 was evaluated by liquid chromatography using these columns. The results are given in Tables 1 and 2.

[Table 1]

| Racemic body | Poly-**ACd** | | Poly-**ACn** | | Poly-**AQn** | | Poly-**AQd** | | Poly-**Cn** | |
|---|---|---|---|---|---|---|---|---|---|---|
| | $k_1$' | $\alpha^a$ | $k_1$' | $\alpha^a$ | $k_1$' | $\alpha^a$ | $k_1$' | $\alpha^a$ | $k_1$' | $\alpha^a$ |
| **1** | 0.87 | 1 | 0.86 | 1 | 0.48 | 1 | 0.87 | 1 | 0.12 | 1 |
| **2** | 0.40 | 1 | 0.37 | 1 | 0.22 | 1 | 0.36 | 1 | 0.44 | 1 |
| **3** | 0.53 | 1 | 0.54 | 1.29 (+) | 0.27 | 1 | 0.52 | 1 | 0.63 | 1 |
| **4** | 3.58 | 1 | 2.83 | 1.36 (+) | 1.59 | 1 | 2.62 | 1 | 4.41 | 1.49 (-) |
| **5** | 12.30 | 1.15 (+) | 11.30 | 1.08 (-) | 5.59 | 1.19(+) | 9.36 | 1 | 11.30 | 1 |
| **6** | 4.52 | 1.17 (+) | 3.52 | 1.19 (-) | 2.45 | 1 | 3.62 | 1.23 (-) | 3.96 | 1 |
| **7** | 1.12 | 1 | 0.96 | 1 | 0.61 | 1 | 1.01 | 1 | 1.40 | 1 |
| **8** | 12.30 | 1.11 (-) | 8.41 | 1 | 5.36 | 1.24 (-) | 8.70 | 1 | 16.30 | 1 |
| **9** | 2.57 | 1 | 1.72 | 1 | 0.97 | 1 | 1.76 | 1 | 1.35 | 1 |
| **10** | 2.06 | 1 | 1.89 | 1.11 (-) | 1.20 | 1 | 1.65 | 1 | 1.59 | 1 |
| **11** | 2.70 | 1 | 2.50 | 1 | 1.68 | 1 | 2.40 | 1 | 3.07 | 1 |
| **12** | 5.01 | 1.12 (+) | 4.72 | 1 | 3.48 | 1.10 (+) | 4.39 | 1.07 (-) | 3.67 | 1 |
| **13** | 5.79 | 1.13 (-) | 6.33 | 1.44 (+) | 4.36 | 1 | 6.36 | 1 | 5.73 | 1 |

(continued)

| Racemic body | Poly-**ACd** | | Poly-**ACn** | | Poly-**AQn** | | Poly-**AQd** | | Poly-**Cn** | |
|---|---|---|---|---|---|---|---|---|---|---|
| | $k_1$' | α[a] | $k_1$' | α[a] | $k_1$' | α[a] | $k_1$' | α[a] | $k_1$' | α[a] |
| **14** | 3.56 | 1.88 (-) | 3.03 | 1.67 (+) | 0.85 | 1 | 2.20 | 3.67 (+) | 0.70 | 1 |
| **15**[b] | 4.64 | 2.30 (-) | 3.02 | 2.81 (+) | 1.26 | 1.20 (-) | 4.50 | 1 | 1.09 | 1 |
| **16** | 2.65 | 2.29 (+) | 1.61 | 3.02 (-) | 0.77 | 1 | 2.07 | 3.87 (-) | 0.70 | 1 |

[a] The signs in brackets denote the enantiomer (optical rotation detection) eluted first (the same applies to Table 2 below).
[b] The signs in brackets denote the enantiomer (CD detection (254 nm)) eluted first.

[Table 2]

| Racemic body | Poly-**ACd** | | Poly-**ACn** | | Poly-**AQn** | | Poly-**AQd** | | Poly-**Cn** | |
|---|---|---|---|---|---|---|---|---|---|---|
| | $k_1$' | α[a] | $k_1$' | α[a] | $k_1$' | α[a] | $k_1$' | α[a] | $k_1$' | α[a] |
| **Boc-Ala** | 8.66 | 1.17(+) | 6.25 | 1.13(-) | 5.99 | 1.20(+) | 6.69 | 1.18 (-) | 7.65 | 1.10(-) |
| **Boc-Phe** | 11.7 | 1.46 (-) | 9.36 | 1.15(+) | 8.31 | 1.43 (-) | 10.1 | 1.07 (+) | 17.5 | ca. 1 (+) |
| **Boc-Val** | 3.82 | 1.31 (-) | 2.82 | 1.11 (+) | 2.42 | 1.14(-) | 2.78 | ca. 1 (+) | 3.98 | ca. 1 (+) |
| **Boc-Leu** | 3.77 | 1.27 (+) | 2.86 | 1.08 (-) | 2.68 | 1.10(+) | 2.82 | 1.09(-) | 3.23 | ca. 1 (-) |
| **Boc-Pro** | 4.99 | ca. 1 (+) | 3.56 | ca. 1 (-) | 3.43 | 1.42 (+) | 3.56 | ca. 1 (-) | 4.78 | 1.49 (-) |

[a] The signs in brackets denote the enantiomer (optical rotation detection) eluted first.

Liquid chromatography for optical resolution in Table 1 was performed using a mixed solvent of hexane/2-propanol=90/10 (v/v) in the mobile phase, at a flow rate of 0.1 mL/min, detection wavelength of 254 nm, and temperature of 25°C. Liquid chromatography of the amino acid derivatives of Table 2 was performed using, in the mobile phase, a mixed solvent of hexane/2-propanol=90/10 (v/v) having 2% of acetic acid added thereto, at a detection wavelength of 230 or 240 nm. The number of theoretical plates of the columns using benzene was about 1500 to 2000. The retention time was evaluated with respect to the elution time ($t_0$) of tri-tert-butyl benzene.

The detected optical isomers were identified using a UV/Vis multi-wavelength detector (MD-2010 Plus, by JASCO, 254 nm) and an optical rotation detector (OR-2090 Plus, by JASCO).

In Table 2, "Boc" denotes a tert-butoxycarbonyl group.

The retention factor $k_1$' in the tables was worked out in accordance with Expression (1) below. The separation factor α is the ratio of $k_2$' with respect to $k_1$'.

$$\text{Retention factor } (k_n') = (t_n - t_0)/t_0 \quad (1)$$

(In the expression, $t_n$ denotes the retention time of the n-th detected optical isomer)

INDUSTRIAL APPLICABILITY

The separating agent for optical isomers of the present invention can be expected to allow separating target substances of optical resolution, or to enhance resolution efficiency, or to reverse elution orders, depending on combinations of factors that include, among others, the length of the helical structure of the helical polymer, the type of optically active sites, and the screw direction of the helical polymer. Therefore, findings and improvements as regards resolution conditions of new optical isomers are expected to be forthcoming as a result of research on chemical bonding of helical polymers to carriers such as silica gel, and novel compositions of mobile phases, research on combinations of optically active sites in the helical polymers, and research on the screw direction and length of the helical structures.

## Claims

1. A separating agent for optical isomers, comprising a helical polymer that has a structure represented by Formula (I), and a carrier that supports the helical polymer, wherein the helical polymer is supported by the carrier:

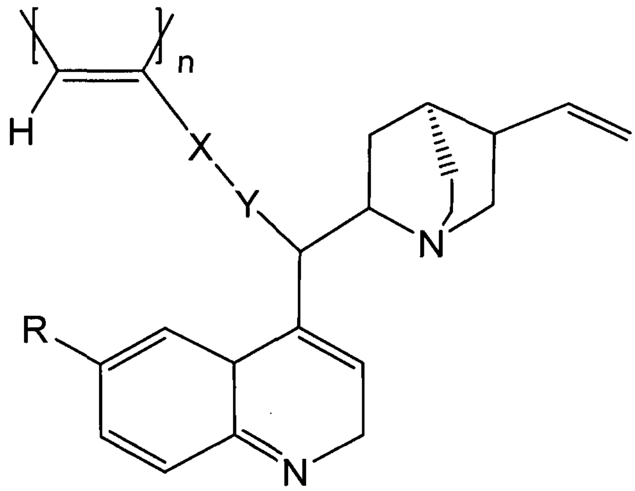

(I)

wherein X represents a divalent aromatic group, a single bond or a methylene group; R represents hydrogen or a C1-C5 alkoxy; and n represents an integer equal to or higher than 5,
and when X is a divalent aromatic group, Y represents -CONH-, -COO-, -NHCONH-, -NHCSNH-, -$SO_2$NH- or -NHCOO-, and when X is a single bond or a methylene group, Y represents -COO-, -NHCONH-, -NHCSNH- or -NHCOO-.

2. The separating agent for optical isomers according to claim 1, wherein X in the Formula (I) is a divalent aromatic group, and Y is -CONH-, -COO-, -NHCONH-, - NHCSNH-, -$SO_2$NH- or -NHCOO-.

3. The separating agent for optical isomers according to claim 1, wherein X in the Formula (I) is a single bond or a methylene group, and Y is -COO-, -NHCONH-, - NHCSNH- or -NHCOO-.

4. The separating agent for optical isomers according to claim 1 or 2, wherein X in the Formula (I) is a phenylene group, and Y is -CONH-.

5. The separating agent for optical isomers according to any one of claims 1 to 4, wherein R in the Formula (I) is hydrogen or a methoxy group.

6. The separating agent for optical isomers according to any one of claims 1 to 5, wherein the carrier is silica gel.

## Patentansprüche

1. Trennungsmittel für optische Isomere, umfassend ein helikales Polymer, welches eine durch die Formel (I) dargestellte Struktur aufweist, und einen Träger, welcher das helikale Polymer stützt, wobei das helikale Polymer durch den Träger gestützt wird:

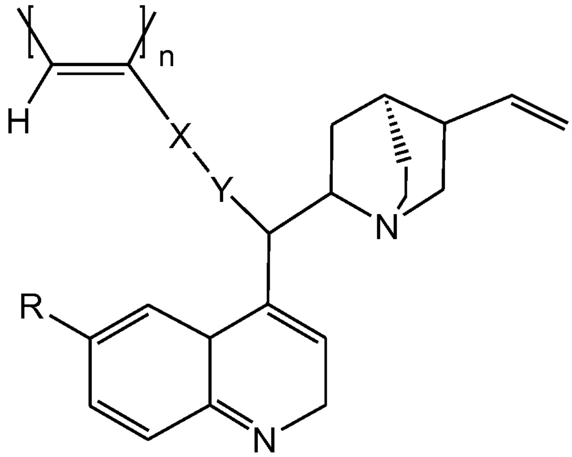

(I)

worin X eine divalente aromatische Gruppe, eine Einfachbindung oder eine Methylengruppe bedeutet;
R Wasserstoff oder eine $C_1$-$C_5$-Alkoxygruppe bedeutet; und in eine ganze Zahl bedeutet, die gleich oder größer ist als fünf,
und wenn X eine divalente aromatische Gruppe ist, dann bedeutet Y -CONH-, -COO-, -NHCONH-, -NHCSNH-, -$SO_2$NH- oder -NHCOO-, und wenn X eine Einfachbindung oder eine Methylengruppe ist, dann bedeutet Y -COO-, -NHCONH-, -NHCSNH- oder -NHCOO-.

**2.** Das Trennungsmittel für optische Isomere gemäß Anspruch 1, worin X in der Formel (I) eine divalente aromatische Gruppe ist und Y -CONH-, -COO-, -NHCONH-, -NHCSNH-, - $SO_2$NH- oder -NHCOO- ist.

**3.** Das Trennungsmittel für optische Isomere gemäß Anspruch 1, worin X in der Formel (I) eine Einfachbindung oder eine Methylengruppe ist und Y -COO-, -NHCONH-, -NHCSNH- oder -NHCOO- ist.

**4.** Das Trennungsmittel für optische Isomere gemäß Anspruch 1 oder 2, worin X in der Formel (I) eine Phenylengruppe und Y -CONH- ist.

**5.** Das Trennungsmittel für optische Isomere gemäß einem der Ansprüche 1 bis 4, worin R in der Formel (I) ein Wasserstoff oder eine Methoxygruppe ist.

**6.** Das Trennungsmittel für optische Isomere gemäß einem der Ansprüche 1 bis 5, worin der Träger ein Silicagel ist.

## Revendications

**1.** Agent de séparation pour isomères optiques, comprenant un polymère hélicoïdal qui possède une structure représentée par la Formule (I) et un support qui supporte le polymère hélicoïdal, dans lequel le polymère hélicoïdal est supporté par le support :

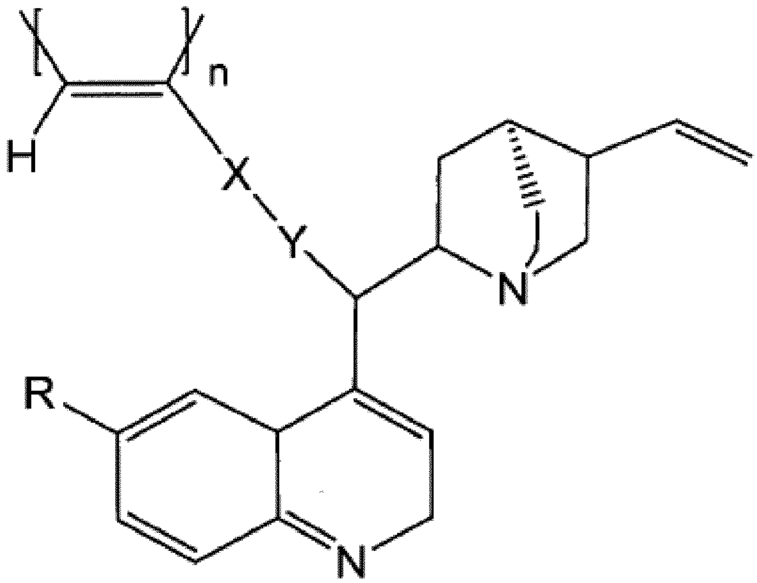

(I)

dans lequel X représente un groupe aromatique divalent, une liaison simple ou un groupe méthylène ; R représente de l'hydrogène ou un alcoxy C1-C5 ; et n représente un nombre entier supérieur ou égal à 5, et dans lequel X est un groupe aromatique divalent, Y représente -CONH-, - COO-, -NHCONH-, -NHCSNH-, -$SO_2$NH- ou -NHCOO- et, lorsque X est une liaison simple ou un groupe méthylène, Y représente -COO-, -NHCONH-, -NHCSNH- ou - NHCOO-.

2. Agent de séparation pour isomères optiques selon la revendication 1, dans lequel X dans la Formule (I) est un groupe aromatique divalent et Y est -CONH-, - COO-, -NHCONH-, -NHCSNH-, -$SO_2$NH- ou -NHCOO-.

3. Agent de séparation pour isomères optiques selon la revendication 1, dans lequel X dans la Formule (I) est une liaison simple ou un groupe méthylène et Y est - COO-, -NHCONH-, -NHCSNH- ou -NHCOO-.

4. Agent de séparation pour isomères optiques selon la revendication 1 ou 2, dans lequel X dans la Formule (I) est un groupe phénylène et Y est -CONH-.

5. Agent de séparation pour isomères optiques selon l'une quelconque des revendications 1 à 4, dans lequel R dans la Formule (I) est de l'hydrogène ou un groupe méthoxy.

6. Agent de séparation pour isomères optiques selon l'une quelconque des revendications 1 à 5, dans lequel le support est du gel de silice.

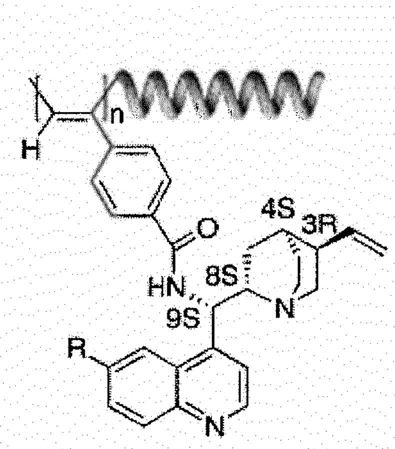

R = H, poly-**ACd**
R = OMe, poly-**AQn**

(a)

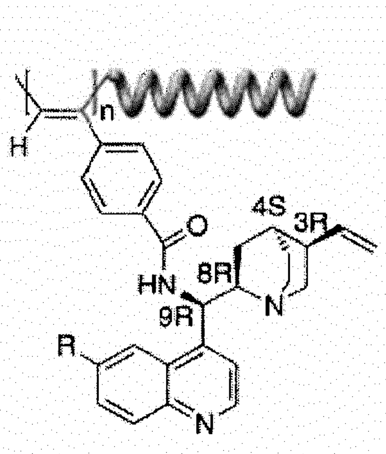

R = H, poly-**ACn**
R = OMe, poly-**AQd**

(b)

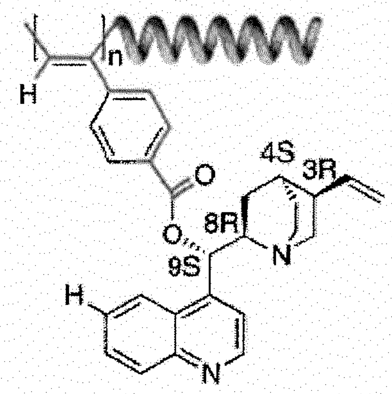

poly-**Cn**

(c)

Fig.1

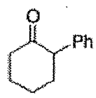
1

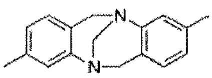
2

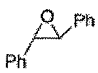
3

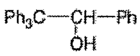
4

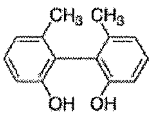
5

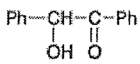
6

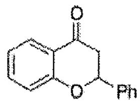
7

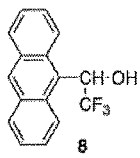
8

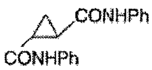
9

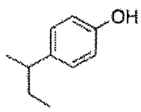
10

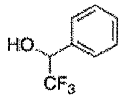
11

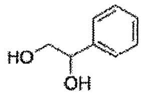
12

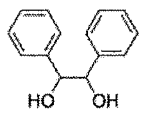
13

$Co(acac)_3$
14

$Ru(acac)_3$
15

$Cr(acac)_3$
16

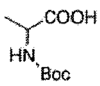
**Boc-Ala**

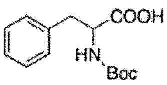
**Boc-Phe**

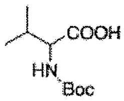
**Boc-Val**

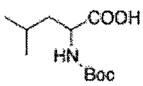
**Boc-Leu**

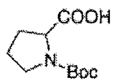
**Boc-pro**

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02030853 A
- WO 2007063994 A
- WO 2011024718 A
- US 20110121229 A
- JP 2010024173 A


### Non-patent literature cited in the description


- *J. Am. Chem. Soc.,* vol. 131, 6709
- *J. Poly. Sci. A,* 2011, vol. 49, 5192
- *ACS Macro Lett.,* 2012, vol. 1, 261
- *Tetrahedron: Asymmetry.,* 1995, vol. 6, 1699
- *Eur. J. Org. Chem.,* 2000, 2119
- *Eur. J. Org. Chem.,* 2010, 3449